Europäisches Patentamt

**European Patent Office**

Office européen des brevets

(11) Publication number: **0 138 414**
A2

(12) # EUROPEAN PATENT APPLICATION

(21) Application number: **84306427.0**

(22) Date of filing: **20.09.84**

(51) Int. Cl.⁴: **A 21 D 13/08**

(30) Priority: **20.09.83 US 533947**

(43) Date of publication of application: **24.04.85**
**Bulletin 85/17**

(84) Designated Contracting States: **AT BE CH DE FR GB IT
LI LU NL SE**

(71) Applicant: **NABISCO BRANDS INC., Nabisco Brands
Plaza, Parsippany New Jersey 07054 (US)**

(72) Inventor: **Bosco, Peter M., 4 Bonny Road, Brookfield
Center Connecticut 06805 (US)**
Inventor: **Chrysam, Michael M., Rt. 4 Wiley Lane,
Newtown Connecticut 06470 (US)**
Inventor: **Pelloso, Turiddu, 44 Jackson Drive, Danbury
Connecticut 06810 (US)**

(74) Representative: **Thomas, Roger Tamlyn et al, D. Young &
Co. 10 Staple Inn, London WC1V 7RD (GB)**

(54) Method for manufacturing baked goods containing soft flavor chips.

(57) A process is described for manufacturing flavor chip-containing baked goods, such as cookie products, wherein the flavor chips, although themselves normally solid at ambient conditions, develop within the product a soft texture which is maintained during extended storage. The process relies upon maintaining freshly-baked flavor chip-containing cookies at temperatures of from about 20°C to 50°C for a predetermined period of time before returning the cookies to normal temperature conditions encountered during storage.

## METHOD FOR MANUFACTURING BAKED GOODS

## CONTAINING SOFT FLAVOR CHIPS

BACKGROUND OF THE INVENTION

The present invention relates to the manufacture of baked goods, and more particularly, to the manufacture of cookies containing solid or semi-solid flavor chips, such as chocolate chips, wherein such chips are caused to be desirably soft throughout the extended shelf-life of the cookies.

Baked goods containing flavor chips such as chocolate chips, peanut butter and butterscotch chips are well known in the art. These flavor chips, consisting primarily of sugar, fat and flavorants, are available in solid form which can be incorporated in conventional cookie doughs prior to baking.

During baking, flavor chips contained in baked goods undergo a degree of melting and softening, and for a short period of time after baking of the cookie, the flavor chips remain in a soft or semi-soft state. This soft texture of flavor chips in cookies is a desirable attribute; however, within a few days after baking, the chips begin to re-solidify and can eventually become quite hard.

Fresh, home-baked products, such as cookies, are generally consumed within a very short time after baking; as such, the flavor chips in such cookies generally will remain in a desirably soft, semi-solid state during the anticipated shelf-life of the cookies. However, for ready-to-serve cookies (i.e., baked cookies prepared by commercial manufacturers and which are not purchased for consumption until long after they have been baked), the flavor chips therein are undesirably hard at the time of consumption. This problem is particularly severe in ready-to-serve cookies which are deliberately formulated so as to remain soft or chewy during extended periods of time and thereby more closely resemble fresh-baked cookies. Where cookies of this type are flavor chip-containing, the presence of hard, solid chips significantly detracts from the otherwise "fresh-baked" nature of the cookie.

A number of attempts have been made by prior workers to develop flavor chip-containing cookies in which the flavor chips will retain a soft texture after extended periods of storage. Certain of these efforts have been directed to modification of the properties of the flavor chip per se through addition of ingredients which aid in retention of a soft texture. In these efforts, however, difficulties are often encountered with respect to the handling of the flavor chips. For example, chips can be formulated which are soft or semi-solid for extended periods, but this softness is present in the as-prepared chip; as a consequence, the chips are difficult to handle and package in bulk form and lose their structural integrity during their incorporation into cookie doughs. In addition, government-established standards of identity for certain flavor chips or components thereof may place restrictions on additional ingredients which can be employed while still producing a true flavor chip for labelling and advertising purposes.

Alternative routes to the preparation of flavor chip-containing baked goods in which the flavor chips retain a soft, semi-solid texture include those wherein the ingredients of the dough or batter are chosen so as to achieve flavor chip softening, and retention thereof. An example of this approach

2.

is found in U.S. Patent No. 4,360,534 to William J. Brabbs, et al., issued November 23, 1982. According to this patent, flavor chip-containing cookie doughs are formulated to include both shortening which is fluid at normal cookie-storage temperatures and an emulsifier to render the dough system shortening-continuous. The patentees assert that through use of this combination of ingredients, migration of fluid shortening into the flavor chips after baking is enhanced and causes the flavor chips to develop a stable, soft texture after a certain period of time.

While the foregoing approach may be effective in eliminating difficulties with respect to use of initially-formulated soft flavor chips, its applicability is limited since there exist many flavor chip-containing cookie formulations where emulsifier levels of the type required in U.S. Patent No. 4,360,534 are undesirable. In addition, even where emulsifier is employed, still further improvement in the softness of the flavor chips than is attainable according to the Brabbs, et al. method would be desirable.

SUMMARY OF THE INVENTION

The present invention concerns a process for preparing flavour chip-containing baked goods, such as cookies, having a stable soft chip texture after baking, particularly such a process wherein a dough or batter containing no substantial amounts of emulsifier is employed.

In the process hereinafter described in detail an emulsifier-free dough or batter is formulated by admixing (1) flavour chips, comprised of sugar, fat and flavorant,

3.

which are substantially solid at conditions at which the cookie dough is prepared; (2) water; (3) a sugar component; (4) flavor; and (5) a shortening component comprising a mixture of a shortening which is fluid at temperatures at which baked cookies conventionally are stored and a shortening which is solid at said temperatures; baking the dough or batter to produce a baked flavor chip-containing product; and thereafter maintaining the baked product at a temperature in the range of from about 25°C to about 50°C for a period of time of from about 3 to 30 days.

This invention also includes a process wherein a bakeable dough or batter is formulated by admixing ingredients (1)-(4) above, and (5) a shortening component comprising, at least in part, a shortening which is fluid at temperatures at which baked cookies conventionally are stored; baking the dough or batter to produce a baked flavor chip-containing product; and thereafter maintaining the baked product at a temperature in the range of from about 35°C to about 50°C for a period of time of at least one week.

After this period of maintenance at temperatures above normal storage temperatures, the cookies or other baked goods are then further processed, if required (e.g., packaging), for distribution through normal channels of trade under normal storage temperature conditions (i.e., ambient temperature).

Unexpectedly, it has been found that the above-noted period of maintenance at temperatures above normal storage temperatures causes the flavor chips in the cookies to develop a degree of stable textural softness which is not attained even after extended periods of maintenance at normal storage temperatures. Moreover, it has been found that the process of

4.

this invention permits the attainment of a desirable degree of a stable textural softness in the flavor chips even where the cookie formulation is free of emulsifiers and/or contains relatively high proportions of solid or plastic shortenings. The term "free of emulsifiers" as used herein means that the dough formulations used to prepare the cookies contain only amounts of emulsifiers which do not materially contribute to the achievement of the desirable effects observed.

DETAILED DESCRIPTION OF THE INVENTION

While the invention is applicable to a wide variety of product shapes, sizes and formulations, the description will focus on the preparation of products recognizable as "cookies", i.e., small cakes which are prepared from doughs or batters which are formed either before of after baking.

The doughs or batters are formulated from flour, water, sugar, shortening and flavor chips, as well as additional ingredients typically used in baking formulations, e.g., flavors, leavening agents, protein supplements, colors and the like. We will not attempt to distinguish flour products by traditional names, e.g., cookie, cake, biscuit, cracker, or the like, because the various products referred to by one of these "category" names are often virtually identical in major or basic ingredients, to other products given different category names. Similarly, the terms batter and dough define overlapping compositions. Thus, the only significance which is ascribed to these terms is that which can be ascribed on the basis of historical usage, rather than technical significance or applicability to the present invention.

The flour employed in the formulation can be any cereal grain or edible seed meal comminuted to the degree required to insure adequate blending with other components of the formulation. Examples of such flours are wheat flour, corn flour, rye flour, corn starch, soy isolates and the like.

Water is employed at a level which will impart sufficient fluidity to the cookie dough to permit it to be formed into suitable shapes, dropped onto baking pans or belts, etc. Added water (as such, or as part of added ingredients such as eggs), together with moisture present in the flours, sugar syrups, shortening or flavor chips, should be such that, at the baking conditions conventionally employed in cookie baking, the moisture content of the final baked cookie product is less than about 10% by weight, and preferably below about 6% by weight. In addition, the amount of water present in the formulation should provide a water activity $(A_w)$ in the baked cookie product of from about 0.25 to 0.85.

The sugar component of the cookie formulation can consist of any number of mono-, di- or polysaccharides which will impart the desired degree of sweetness to the cookie. As is known in the art, the sugar component of the cookie formulation can be varied to achieve desired effects, e.g., crispiness, chewiness or a combination thereof. For example, the sugar component can consist of sugars which are readily-crystallizable at the baking conditions and water content and activity of the cookie, in which case the final baked cookie product, within a few days after preparation, is dry and crisp. Alternatively, the sugar component can consist of sugars which are crystallization-resistant or only slowly crystallizable at the conditions encountered during baking, in which case the final cookie product will have a chewy, moist texture.

The readily-crystallizable sugars are sucrose alone or a mixture of sucrose with other sugars which are crystallization-resistant or only slowly crystallizable but which are not present at levels sufficiently high to inhibit sucrose crystallization.

The crystallization-resistant or slowly crystallizable sugars are, for example, fructose, glucose, maltose, invert sugar, honey, high fructose corn syrup, and the like. These sugars may be used in conjunction with readily-crystallizable sugars, such as sucrose, wherein sucrose crystallization is inhibited by the presence of these crystallization-resistant or slowly crystallizable sugars or by other materials (e.g., dextrins).

The cookie dough formulation can contain a sugar component formulated so as to achieve a combined crisp and chewy texture by provision of discrete regions of both readily-crystallizable and crystallization-resistant sugars within the cookie. This can be achieved by lamination or intermixing of separately-prepared doughs, one containing a crystallization-resistant sugar component and one containing a readily-crystallizable sugar component. See, e.g., U.S. Patent No. 3,026,205 to Stone and published European Patent Application No. 0031718. Alternatively, the discrete regions of these sugar components can be generated in situ in a single cookie dough through enzymatic processes. See, e.g., U.S. Patent No. 2,801,921 to Moses; U.S. Patent No. 3,026,205 to Stone; and U.S. Patent No. 4,344,969 to Youngquist, et al.

The shortening component of the doughs according to the present invention should comprise about 20-50% by weight of the overall shortening component, of a shortening which is

7.

fluid at storage temperatures of as low as about 10 to 15°C. Above such storage temperatures, of course, the shortening will remain fluid.

These fluid shortenings are typically liquid glyceride oils which consist primarily of triglycerides. To remain liquid at lower temperatures, the shortening should contain a minimum amount of triglycerides having melting points higher than about 15°C, so as to limit the solids increase when the shortening is cooled. It is desirable that the shortening be chemically stable and resistant to oxidation during conventional shelf-storage periods and conditions.

Suitable shortenings (oils) may be derived from naturally occurring liquid glyceride oils such as cottonseed oil, soybean oil, safflower oil, corn oil, olive oil, coconut oil, peanut oil, rapeseed oil, sesame seed oil, sunflower seed oil, and mixtures thereof. Also suitable are liquid oil fractions from palm oil, lard and tallow obtained, for example, by graining or directed interesterification followed by separation of the oil. Oils predominating in triglycerides of unsaturated acids may need some hydrogenation to maintain flavor, but care should be taken not to greatly increase the amount of triglycerides melting above 15°C. When oils are selected which have a larger amount of solids melting between 15°C and 40°C than is desirable, it may be necessary to separate out the solids. Refined and slightly hydrogenated soybean oil has proved to be especially suitable. Refined cottonseed oil is also suitable.

The fluid shortening can be a mixture of normally liquid shortening and normally solid shortenings, wherein

8.

the total aggregate mixture is fluid. Such fluid shortenings contain, for example, about 3-4% of fully hydrogenated soybean oil. They are pourable suspensions at 15°C and appear homogeneous and clear at temperatures of about 30-35°C.

The remainder of the shortening component, e.g., about 40-80% of the total shortening will be any suitable edible fat or oil or mixture thereof which is solid at the storage temperatures encountered by the baked cookie. Typically, this material will consist of a plastic shortening, e.g., a mixture of partially hydrogenated soybean oil and fully hydrogenated palm or cottonseed oils.

As earlier noted, overtly added emulsifiers need not be employed in the cookie formulations according to the present invention in order to obtain flavor chips having a soft, stable texture. The only emulsifiers which are typically present in the present doughs and baked goods will be contributed by the flavor chips. This emulsifier generally will make up about 0.01-0.1% by weight of the dough formulations, and does not materially contribute to the desirable effects observed in the baked cookies. Such emulsifiers include mono- and diglycerides of fatty acids, polyglycerol esters, lecithins and the like.

The flavor chips employed in the cookie formulations according to the present invention also comprise sugar, fats (e.g., cocoa butter and dairy butter) and flavorants (e.g., chocolate liquor, peanut butter, mint and butterscotch). The chips can be selected from any number of commercially-available products. Preferred chips will contain about 28-34% fat. The flavor chips should be substantially solid at the temperature conditions at which the cookie dough is formulated to ensure

9.

ease of handling and maintenance of the structural integrity of the flavor chips in the cookie dough. Preferably, the chips will be sized so that a pound of any given type will contain about 1,500 to 5,000 chips. Larger chips are known in the baking art as morsels, and are also useful in the practice of the present invention.

As those skilled in the art will appreciate, the foregoing cookie dough ingredients may be employed in a wide range of relative ratios depending upon the type of cookie desired to be produced.

According to the process of the present invention, the cookie dough is baked at typical conditions employed in the industry, e.g., at 125°C to 250°C for a time suitable for preparing a typical baked cookie product from the ingredients employed. During the baking, the flavor chips melt, soften and structurally open in the presence of the elevated heat, and migration of the liquid shortening component of the cookie dough into the softened chips begins to take place. When the chips resolidify upon return of the cookies to ambient conditions, migrated shortening incorporated therein results in a somewhat softer chip than is achieved where there is little or no shortening migration. After solidification, the chips will continue to imbibe fluid shortening at ambient conditions to a certain degree, thereby developing additional softness.

According to the present invention, however, it has been found that the degree of softness ultimately achieved by virtue of oil migration occurring during ambient temperature storage can be surpassed by first maintaining the cookies at temperatures above those encountered in normal storage for a period of time, e.g., in the order of about 3 to 30 days,

10.

preferably for at least one week. These conditioning temperatures, generally on the order of from 25°C to about 50°C, preferably from about 35°C to 50°C, are low enough to prevent any significant moisture loss or additional cooking of the already-baked cookie, as well as preventing complete melting (and loss of integrity) of the flavor chips in the cookie. Under the above-noted conditions, however, the degree of softness achieved in the flavor chips is greater than that attainable even after prolonged storage at temperatures of about 10-15°C, and the softening effect is enhanced at the preferred conditioning temperature range over that observed at ambient temperature storage, e.g., at about 18-22°C. Moreover, the chip softness attained in the cookies made according to the process of the present invention is stable in the sense of not degrading (to greater degrees of hardness) even after long periods of storage, preferably for at least about 2 months. Indeed, the softness obtained after the maintenance period according to the present invention will generally be found to increase with periods of ambient temperature storage until a degree of equilibrium is reached. This equilibrium level of chip softness is, however, greater than that attained in cookies not subjected to the controlled temperature maintenance of this invention.

The foregoing features of this invention are illustrated with respect to the following example.

## EXAMPLE 1

Emulsion-free chocolate chip cookie doughs were prepared from water, flour, sugar, whey, levening and flavoring which also incorporated 14 percent by weight shortening and 14

11.

percent by weight of chocolate chips (Mercken's, Mansfield, Mass.; 4,000 chips per pound, 35% chocolate liquor, 56% sugar [50-55% sucrose], 9% cocoa butter, 0.375% lecithin).

The doughs were prepared by (1) creaming together the sugars, shortening, whey, and flavoring for 5 minutes at the low speed setting of a bakery blender; (2) forming a solution of half the leavening and blending it into the mixture of step (1) over 3 minutes; (3) sifting in the flour and the remainder of the leavening over 2 minutes with low speed blending; and (4) adding the chips over 1 minute with low speed blending. The resultant dough was fed into a ribbon cutter to form 10,900 2.375 inch by 0.375 inch 10 gram cookies. The cookies were baked in a bakery oven on a moving belt heated on both sides, passing through heating zones ranging from 140°C to 260°C.

The cookies were transferred to gas-impermeable aluminized paper bags, half of which were subsequently purged with nitrogen, heat-sealed, and stored at either 20°C or 30°C. The chips were qualitatively evaluated for texture by small panels of experts using a 5-point scale: (1) hard/firm; the texture of an unprocessed chip; (2) firm interior/soft exterior; (3) moderately soft; (4) soft throughout; and (5) very soft/creamy. The shortening types used, maintenance conditions and results are summarized in Table II.

TABLE II - COOKIE CHIP TEXTURE

| Shortening | Conditioning Temp./Time | |
|---|---|---|
| | 20°C/2 weeks | 30°C/2 weeks |
| Control[1] | 1-2 | 2-2.5[3] |
| 75/25[2] | 3.0-3.5 | 4-4.5 |
| 50/50[2] | 2.5-3.0 | 3.5-4.0 |

[1] Shortening: partially hydrogenated soybean oil; mp 38-40°C, 38% solids at 10°C; 2.1% solids at 40°C.

[3] The cookies were cooled to 20°C prior to testing.

[2] 75/25 or 50/50 mixture of Vream® plastic shortening (Beoco, Chicago, Ill.); 26.1% solids at 10°C; 13.0% solids at 40°C (partially hydrogenated soybean oil and fully hydrogenated palm and/or cottonseed oil), and Liquid Super Fry③ pourable shortening (Stokely-VanCamp, Columbus, Ohio) (partially hydrogenated soybean oil); 7% solids at 10°C; 4% solids at 40°C.

From Table II, it is readily apparent that a solid shortening used alone (the control shortening) does not effect a significant softening in the chips, even after a conditioning period of 2 weeks at 30°C, while the use of 50% or 75% of a plastic shortening in combination with 50% or 25%, respectively, of a fluid shortening provided a substantially softened chip in a cookie baked from a non-emulsified dough at 20°C which effect increased considerably when the temperature was raised to 30°C. Surprisingly, the chips in cookies prepared from dough incorporating a 75:25 mixture of plastic:liquid shortening were softened more effectively than cookies containing a 50:50 mixture of the two shortening types. The shortening effect was found to be unaffected by the nitrogen purge. The extent of softening attained after two weeks was found to be substantially attained after a one-week conditioning period. No significant increase or degradation in the chip softness was

13.

observed after 2 months air storage under ambient conditions.

Chips from cookies which had been conditioned for 2 weeks at 20°C and 30°C, respectively, were tested by standard gas-liquid chromatographic methods to determine the percent increase in fat content which had occurred. The results are summarized in Table III.

TABLE III - CHIP FAT INCREASE

| Shortening | 20°C/2 weeks | 30°C/2 weeks |
|------------|--------------|--------------|
| Control | 15% | 25% |
| 75/25 | 25% | 35% |
| 50/50 | 20% | 30% |

From the results of Table III, it is apparent that shortening mixtures comprising a mixture of a liquid shortening component and a solid shortening component resulted in substantially-greater increases in chip fat than did the control shortening, and that the fat absorption was enhanced at the increased conditioning temperature. As was expected from the results shown in Table II, the greatest chip fat increase was observed for the combination of 75% plastic shortening with 25% liquid shortening (75/25). Thus it is apparent from the results summarized on Tables II and III as interpreted herein, that cookies comprising fat-containing flavor chips can be prepared from emulsifier free dough components, which chips exhibit a significant and desirable chip softening during a conditioning period at above ambient temperatures. It is expected that the extent of softening will be enhanced as the conditioning temperature is increased and that optimal effects will be achieved at about 35-50°C.

14.

The softening is apparently due to shortening triglyceride diffusion from the crumb matrix of the baked dough into the chip structure. Although approximately equal weights of shortenings and chips comprising about 28-29% fat were used in the above Example. it is expected that the ratio of the shortening mixture to chips could be adjusted over a wide range, limited only by the need to maintain the handling characteristics of the dough and to provide sufficient shortening oil to positively equilibrate with the fats present in the chips.

15.

CLAIMS

1.    A method for manufacturing flavor chip-containing flour-based baked products having a stable, soft chip texture after baking, comprising the steps of:

(a)    preparing a bakeable dough or batter comprising an admixture of substantially solid flavor chips, a sugar component, flour, water and a shortening component, said dough or batter being free of emulsifier and said shortening component comprising a mixture of a shortening which is fluid at temperatures at which baked products conventionally are stored and a shortening which is solid at said temperatures;

(b)    baking said dough or batter to produce a baked chip-containing product; and

(c)    thereafter conditioning the baked product at a temperature in the range of from about 25°C to about 50°C for a period of time in the range of from about 3 to 30 days.

2.    The method of claim 1 wherein the baked products are cookies.

3.    The method of claim 2 wherein the shortening comprises about 20-50% by weight of a shortening which is fluid at about 10-15°C.

4.    The method of claim 1 wherein the solid flavor chips incorporate about 28-34% fat and are selected from the group consisting of chocolate, butterscotch and peanut butter chips.

5.    The method of claim 2 wherein the shortening comprises liquid triglyceride oil.

16.

6.    The method of claim 5 wherein the shortening comprises a mixture of a liquid triglyceride oil and a plastic shortening.

7.    The method of claim 6 wherein the shortening comprises an about 75:25 mixture of the plastic shortening and the liquid triglyceride shortening.

8.    The method of claim 2 wherein the weight ratio of the flavor chips to the shortening component is about 1:1.

9.    The method of claim 2 wherein the conditioning temperature is about 30-50°C.

10.    The method of claim 9 wherein the conditioning time period is at least about one week.

11.    A method for manufacturing flavor chip-containing flour-based baked products having a stable, soft chip texture after baking, comprising the steps of:

(a)    preparing a bakeable dough or batter comprising an admixture of substantially solid flavor chips, a sugar component, flour, water and a shortening component, said shortening component comprising, at least in part, a shortening which is fluid at temperatures at which baked products conventionally are stored;

(b)    baking said dough or batter to produce a baked chip-containing product; and

(c)    thereafter conditioning the baked product at a temperature in the range of from about 35°C to about 50°C for a period of time of at least about one week.

17.

12.    The method of claim 11 wherein the baked products are cookies.

13.    The method of claim 12 wherein said dough is free of emulsifier.

14.    The method of claim 2 wherein the fluid shortening comprises a pourable partially hydrogenated soybean oil.

15.    The method of claim 2 wherein the shortening comprises about 20-50% by weight of a liquid triglyceride oil which is fluid at about 10-15°C.

16.    The method of claim 2 wherein the conditioning time is about 3-30 days.

17.    The method of claim 2 wherein the chips comprise about 28-34% fat.